(19) Europäisches Patentamt
European Patent Office
Office européen des brevets

(11) **EP 4 513 223 A1**

(12) **EUROPEAN PATENT APPLICATION**

(43) Date of publication:
**26.02.2025 Bulletin 2025/09**

(21) Application number: **23192754.2**

(22) Date of filing: **22.08.2023**

(51) International Patent Classification (IPC):
**G01S 7/03** (2006.01)    **G01S 13/44** (2006.01)
**H01Q 3/34** (2006.01)    **H01Q 21/08** (2006.01)
**G01S 13/931** (2020.01)

(52) Cooperative Patent Classification (CPC):
**G01S 7/03; G01S 13/4409; H01Q 3/34;
H01Q 21/08;** G01S 13/931

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Provizio Limited
V14 WV82 Shannon Clare (IE)**

(72) Inventors:
• **HUMPHREY, Denver
  Belfast, BT43 7HD (IE)**
• **CHRISTIE, Steven
  Down, BT27 5TU (IE)**
• **LUDLOW, Peter
  Antrim, BT28 3RW (IE)**
• **BRACTIC, Predrag
  Serbia (RS)**

(74) Representative: **Purdylucey Intellectual Property
23 Ely Place
Dublin 2 D02 N285 (IE)**

(54) **METHOD OF OPTIMIZING A SPARSE ARRAY FOR USE IN A MIMO RADAR**

(57)    Disclosed is a method for designing a sparse antenna array that includes determining a first set of separation distances among a plurality of sparse elements along an axis, wherein the first set minimises the highest radiated power of one or more sidelobes, when the beam is pointed at a boresight for a Uniform Linear Array (ULA) that has an equivalent aperture size but greater number of elements with respect to the sparse antenna array, and determining at least one second set of separation distances among the plurality of sparse elements, that minimises the highest radiated power of one or more sidelobes, when the beam is pointed at different angular directions, wherein at least one of these directions is at an edge of the field of view for the equivalent ULA, wherein the first, and at least one second set of separation distances are identical and optimised simultaneously to minimise their combined error function.

START

Determine a size of an equivalent ULA based on a target sparse number of elements — 1010

Determine the first optimisation angle boundaries based on the nearest local minima of the array factor for the ULA, when the beam is pointed at the boresight — 1020

Set a first optimisation target as the maximum signal level of the array factor at all angles outside of the region between the first optimisation angle boundaries — 1030

Determine the second optimisation boundaries based on the nearest local minima of the array factor for the ULA, when the beam is pointed at an edge of the FOV and the FOV angle — 1040

Set a second optimisation target as the maximum signal level of the array factor at all angles outside of region between the second optimisation angle boundaries — 1050

Optimise the separation distances between the array elements for minimising the first and second optimising targets — 1060

STOP

**FIG. 10**

EP 4 513 223 A1

**Description**

**Field**

The present invention relates to a method of optimizing an antenna array with a reduced number of elements and optimal performance for use in a MIMO radar system.

**Background of Invention**

With research being conducted in many countries into self-driving vehicles, and with over 1.2 billion automobiles in the world, it is clear that autonomous transportation represents a huge emerging market for stakeholders that include both governments and private industry. However, for autonomous transportation to become a reality, affordable sensor systems with high performance and high reliability are necessary. Technologies including radar, lidar, ultrasound, and camera arrays have all been utilised and although each has inherent advantages over some of the others, none are currently adequate for widespread implementation in complex autonomous driving scenarios (such as busy city centre driving), due to a lack of resolution, sensitivity, all-weather capability or affordability. Radar technologies offer cheaper solutions to most of these issues however, with the exception of angular resolution and sensitivity, both of which can be improved - but at a greater cost.

The angular resolution or beamwidth of an antenna array aperture is given by the below equation:

$$\Delta\varphi = \frac{\lambda}{Nd\cos\theta}\dots\dots\dots\dots\dots\dots\dots(1)$$

Where $\Delta\varphi$ is the angular resolution, $\lambda$ is the wavelength, N is the number of antenna elements, d is the spacing between antenna elements and $\Theta$ is the angle of transmission or reception of a signal. The value of d is typically set to $\lambda/2$ in a conventional radar system to ensure Nyquist sampling criterion of the spatial signal at the antenna aperture is met and grating lobes are thereby prevented within the field of view. This therefore means that the above equation simplifies to angular resolution being equal to 2/N for boresight ($\Theta$ = 0 degrees) signals.

In a conventional radar system, a larger antenna array - with associated increased number of antenna elements and related hardware - is therefore needed to improve spatial resolution. As antenna array aperture sizes become larger to achieve this, however, the number of receivers required becomes exceedingly expensive for applications such as automotive radar. When a low angular resolution is required, a wide beam is sufficient and is obtained when a small antenna array aperture, with a small number of antenna elements, is used. When high angular resolution is required, a narrower beam is needed and a larger antenna array aperture with additional elements must be utilised. Additional receivers are therefore required, and this results in an increase to the overall radar cost and size. This means that for applications requiring low cost (such as an automotive radar), a conventional architecture is limited to a minimal number of elements and hence a wide beam. However, the general rule largely applies, i.e., higher angular resolution requires more antenna elements. Conversely, Multiple-input multiple-output (MIMO) radars go some way to alleviate this increase in cost.

MIMO radars are a type of phased array radar which employ transmitters and receivers distributed in such a way that spatial resolution and range are improved when compared to a conventional monostatic radar with an equivalent total number of transmit and receive channels. There are predominately two different types of MIMO radars. One is Statistical MIMO, where the antennas are placed far apart from each other to provide different 'views' of the 'scene', and another is Beam forming MIMO where the antennas are placed close to each other and act together to form a 'virtual', larger, beam forming array.

Beam forming methods like that used in a conventional radar system, and analogous to that formed by digital post-processing in MIMO systems, manipulate the virtual array to make use of wave coherence to focus the energy transmitted or received by each radiating element into a narrow beam, which increases the power in the direction of the beam's peak, while reducing the power in all other directions. By considering beam forming along one axis only, it is seen that larger arrays allow narrower beams with increased focusing of the signal, leading to a higher array gain.

It is widely known to those related to the field that the MIMO technique, which comprises of measuring the magnitude and phase of the signal received at N receivers (multiple outputs) for each of M transmitters (multiple inputs), can be used to form a 'virtual' receive array that is larger than the physical receive array and thereby enables improved object angular resolution. Various modulation schemes for MIMO exist which aim to achieve orthogonality between the signals transmitted by each individual transmitter, such that they can be separated out on the receiver side. These include but are not limited to Time Division Duplex (TDD), Frequency Division Duplex (FDD) and Binary Phase Modulation (BPM). For TDD MIMO, the transmitters sequentially transmit a signal one at a time. The receive elements then receive signals originating from each of the transmitters sequentially in time, and these can thereby be separated according to which transmitter the signal originated from. When the spacing between said transmit and receive elements is set accordingly, the signals at each receiver can be rearranged corresponding to the transmitter from which they originated, and the phase differences on each received radiated wave is such that an equivalent larger number of receive elements appear than are actually present and thus 'virtual' elements are created.

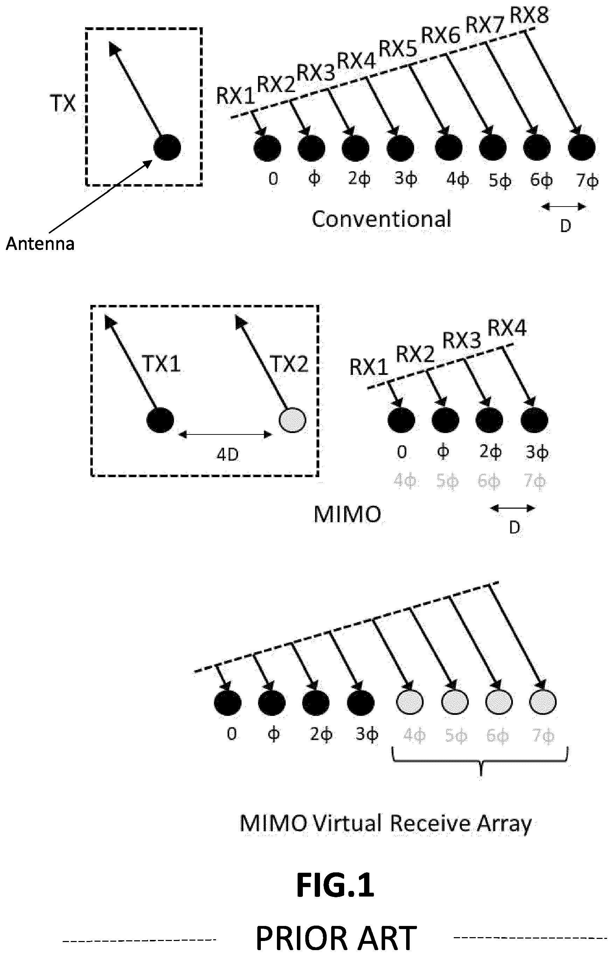

FIG.1 illustrates a virtual array which consists of (M x N) number of elements, whilst only making use of (M + N) physical antenna elements, and which is much larger than the physical number of transmitters and receivers required. Therefore, the angular resolution of the virtual array is much finer than that of the physical array when not used in a MIMO implementation.

The MIMO arrangement shown in FIG. 1 is a uniform linear array (ULA), as the elements lie in a line along one dimension, with uniform separation. Such ULAs allow for grating lobes to be prevented within the radar's field of regard through choice of the antenna separation to satisfy the Nyquist spatial sampling criterion. Linear sparse arrays have aperture widths or sizes equal to their equivalent filled ULAs but are, by definition, sparsely populated. As they need fewer antenna elements than ULAs to create equivalent narrow beams, they belong to the general class of non-uniform linear arrays (NULAs). With fewer elements in the array, 'holes' or vacancies, arise that are deliberately created into the design of the sparse array to achieve, or maintain, certain desired characteristics. It will be widely accepted in the field, that ULAs and NULAs can be extended over two dimensions to form rectangular arrays and so sparse arrays are equally valid in both axes of a rectangular array.

The key advantage of sparse arrays, therefore, is that they have reduced hardware cost for a given angular resolution, which when combined by the additional hardware reductions obtained by a MIMO system, makes such an implementation very attractive. Furthermore, as the spacings between elements in sparse arrays are larger, they are not so affected by mutual couplings between antenna elements (compared to ULAs where the elements are much closer) and for a given number of antenna elements, provide larger apertures (which is the sum of all the inter-element spacings) while detecting more source signals through direction-of-arrival estimation than full ULAs with the same number of elements.

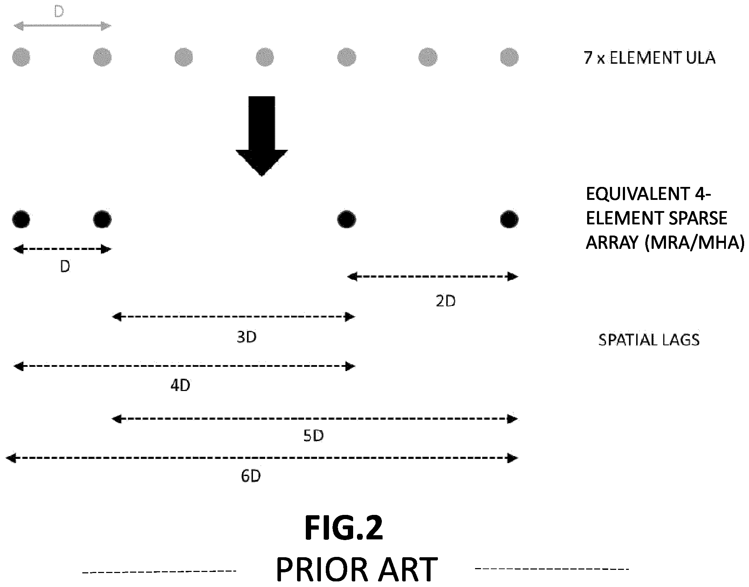

Different types of linear sparse arrays have been developed, in which the most common types are now discussed. Minimum Redundancy Arrays (MRAs) are sparse arrays where all possible spacings, or 'spatial lags', are covered at least once but with as few repeating lags as possible. FIG.2 illustrates this calculation of spatial lags by subtracting all possible sensor positions in the sparse array from each other.

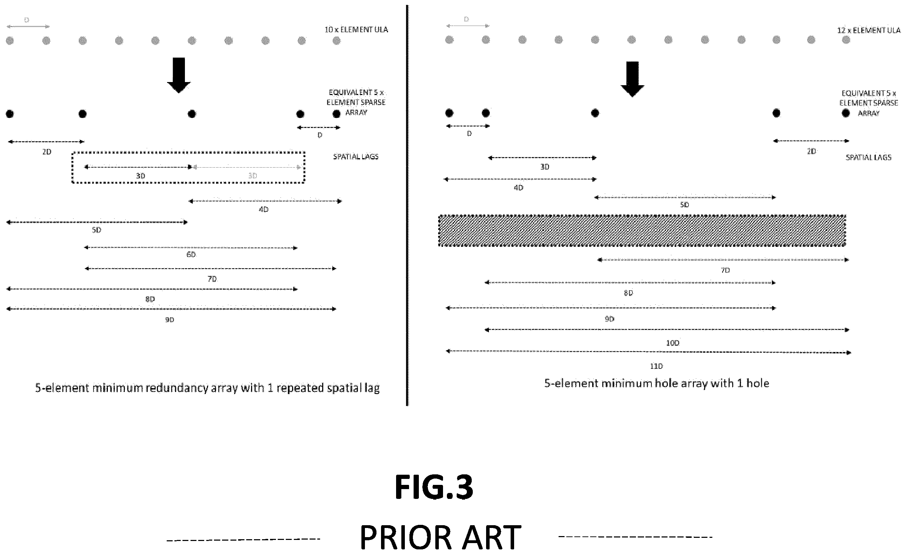

In another type of sparse array called a Minimum Hole Array (MHA), spatial lags are only allowed to appear once, with the array optimised to minimise the number of missing lags in the array, or 'holes' in the 'difference array', which is formed from the spatial lags (differences) that can be generated using the available sensors in the conventional array. In practice though perfect MHAs are rare and element positions follow the known prior-art Golumb ruler spacings for radio astronomy arrays. When the number of sparse elements is less than 5, it has been shown that MRAs and MHAs are identical. FIG.3 illustrates the distinction between a 5-element MRA and a 5-element MHA.

FIG.4 illustrates two different nested array sizes and spacings combined within a single array to produce a hole free combination array, also referred to as a super-nested array. Super-nested arrays have multiple different arrays combined and are similar to nested arrays.

FIG.5 illustrates co-prime arrays, (including extended co-prime arrays) where sub-arrays are designed to run concurrently in the combined array rather than consecutively as in the nested cases.

While each type uses a proven methodology for angle determination, the radiation pattern - which is determined by the array factor calculation for the array - gives an insight into how such arrays can affect object determination in radar applications. The main issue arising from sparse arrays is that the grating lobes resulting from sub-Nyquist spatial sampling may introduce ambiguity into angle finding. In that context, the key problems are how to select the locations of the array elements such that the sidelobe levels (or the lobes, i.e. local maxima, of the array factor that are not the main lobe or beam) of the sparse array are low, minimising the number of missing spatial lags and minimising the number of elements which are needed to enable angle finding.

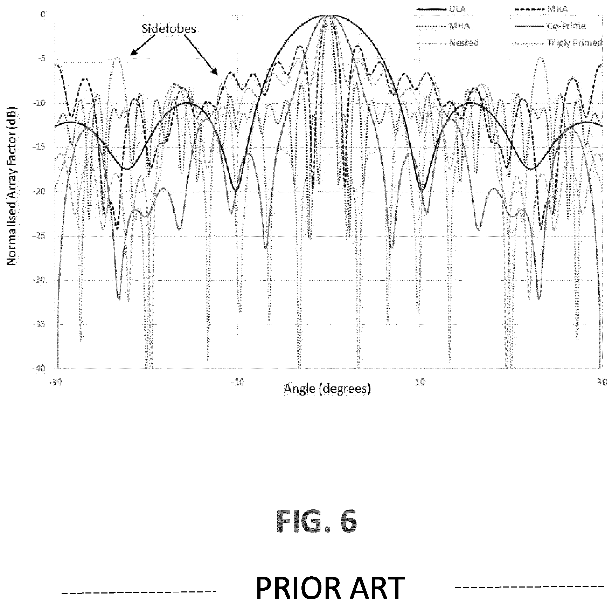

FIG.6 shows this issue by comparing the boresight (0-degrees) array factors for 12-element arrays designed by the previously listed prior-art methods and indicates that many will cause false radar detections as high sidelobes appear at angular regions off-boresight, which are much higher in value than that which would appear from the equivalent ULA having the same aperture size and a separation distance D equalling a half wavelength of the operating frequency. When sidelobes are high in a radar system, it is possible that objects could be detected as a result of the higher signal levels appearing from these, but which will be interpreted as appearing on the main beam, or alternatively a single object may give rise to multiple detections at different angles due to the high sidelobe levels. Furthermore, as a result of the method of implementation of MIMO virtual arrays, whereby transmitters are multiplexed together to give a larger virtual array, such sparse arrays are either difficult to implement, or in the case of nested, triply nested and co-prime arrays don't lead to much of an increase in the virtual array aperture size which in turn reduces the angular resolution.

In view of the above, there is a need for a sparse array antenna design that concurrently considers the magnitude of sidelobes, the number of missing spatial lags and the MIMO array mapping conditions.

## SUMMARY OF INVENTION

The present invention relates to a sparse array antenna.

In an aspect of the present invention, there is provided a method for designing a sparse antenna array. The method includes determining a first set of separation distances among a plurality of sparse elements along an axis, wherein the first set minimises the highest radiated power of one or more sidelobes, when the beam is pointed at a boresight for a Uniform Linear Array (ULA) that has an equivalent aperture size but greater number of elements with respect to the sparse antenna array. The method further includes determining at least one second set of separation distances among the plurality of sparse elements, that minimises the highest radiated power of one or more sidelobes, when the beam is pointed at different angular directions wherein at least one of these directions is at an edge of the field of view for the equivalent ULA, wherein the first, and at least one second set of separation distances are identical and optimised simultaneously to minimise their combined error function.

In an embodiment of the present invention, the at least one second set of separation distances, among the plurality of sparse elements along an axis, minimises the highest radiated power of one or more sidelobes, when the beam is pointed at an angle of 60 degrees off boresight.

In an embodiment of the present invention, the method further includes determining a third set of separation distances, among the plurality of sparse elements, that minimises the highest radiated power of one or more sidelobes, when the beam is pointed at an angle of -60 degrees off boresight.

In an embodiment of the present invention, the highest array factor level of one or more sidelobes is minimised for the first and subsequent sets of identical separation distances.

In an embodiment of the present invention, each of the first and subsequent sets of separation distances include distances that are multiples of the unit separation distance, wherein the unit separation distance is equivalent to half wavelength of an operating frequency of the sparse antenna array.

In an embodiment of the present invention, an aperture size of the sparse antenna array is approximated from a size trend for a minimum redundancy array when the number of sparse elements is less than 12.

In an embodiment of the present invention, an aperture size of the sparse antenna array is approximated from a size trend for a minimum hole array, when the number of sparse elements is equal to or greater than 12.

In an embodiment of the present invention, the method further includes applying a first weighting factor to the calculation of the first set of separation distances to minimise the sidelobe levels at boresight.

In an embodiment of the present invention, the method further includes applying weighting factors to the calculation of any further sets of separation distances to reduce the number of missing spatial lags in the sparse antenna array.

In an embodiment of the present invention, the optimised sparse array is a MIMO virtual array, which is the result of mapping the positions of a plurality of transmit elements and the positions of a plurality of receive elements, wherein the mapping of the MIMO virtual array is taken into account during the optimisation of the first and the at least one other set of separation distances.

Various embodiments of the present invention disclose designing of sparse arrays with low sidelobe levels, while keeping the number of missing lags in the array - or holes in the difference array - at a minimum. As a result, the direction of arrival (DOA) in such arrays can be found with lower computational cost and at a high resolution. Furthermore, the method can be used to design full virtual MIMO arrays and is therefore particularly applicable for high performance radar applications at low cost, by performing a compromise between the brute-force optimization techniques and DSP techniques.

The sparse array design of the present invention makes full use of all virtual elements in a MIMO radar sparse array. Reduction of array factor sidelobes in the sparse array antenna design reduces false detections in a radar system. The sparse array design has an increased radar processing speed compared to that required for a radar with a similar angular resolution implemented by an equivalent ULA due to the reduced number of channels. Furthermore, the sparse array design has a reduced DSP complexity in sparse array decoding due to the reduced number of holes in the array, and lower sidelobe levels.

## BRIEF DESCRIPTION OF DRAWINGS

The present invention will be more clearly understood from the following description of embodiments thereof, given by way of example only, with reference to the accompanying drawings, in which

FIG.1 shows prior art of a conventional radar system comprising a single transmit antenna (TX) and a receive antenna (RX) array configured as an 8 element ULA and its equivalent MIMO configuration achieved using 2 transmit antennas and 4 receive antennas;

FIG.2 shows a 7-element ULA and its equivalent 4-element sparse array in MRA and MHA configurations;

FIG.3 shows the principal difference for sparse arrays designed as an MRA and an MHA;

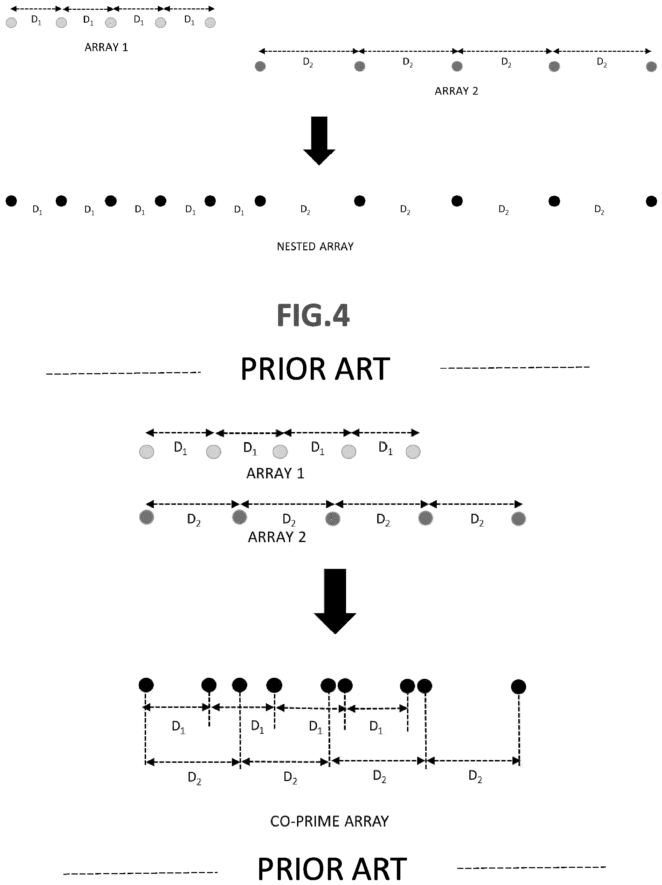

FIG.4 shows an example of the various types of nested sparse array designs;

FIG.5 shows an example of a co-prime sparse array design;

FIG.6 shows the predicted array factor for 12-element arrays based on design philosophies of ULAs, MRAs, MHAs, Co-Primes, Nested and Triply Nested arrays;

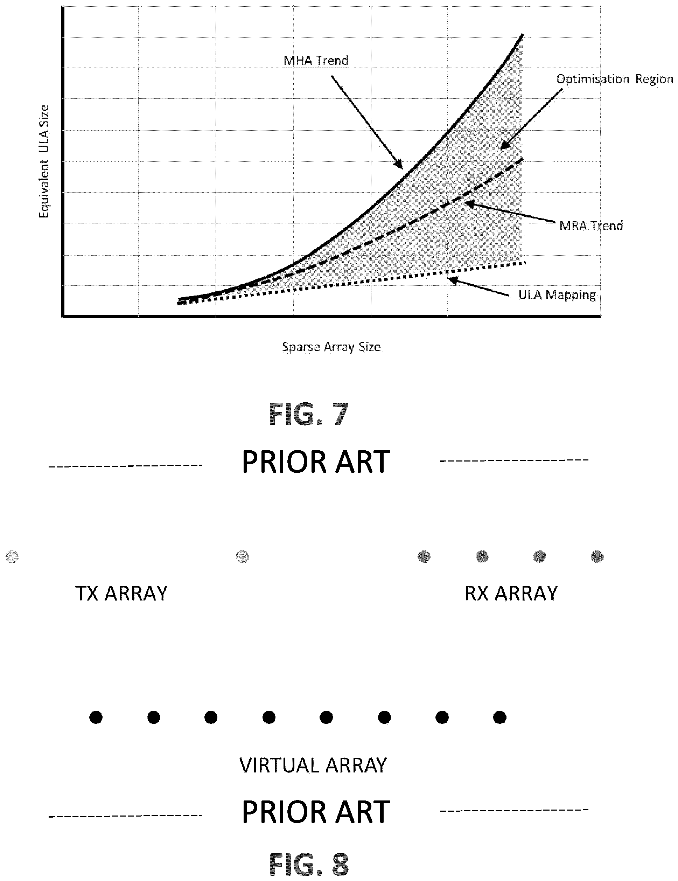

FIG.7 shows the trend lines for sparse array sizes compared to their equivalent ULA size;

FIG.8 shows a typical example of a MIMO virtual array from 2 x TX antennas and 4 x RX antennas;

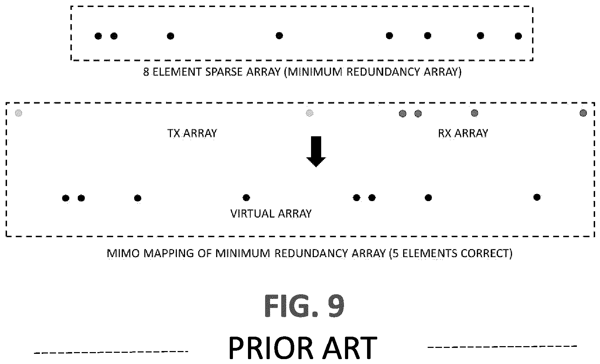

FIG.9 shows an 8-element minimum redundancy array and one potential mapped MIMO virtual array to partially approximate it using 2 transmit elements and 4 receive elements;

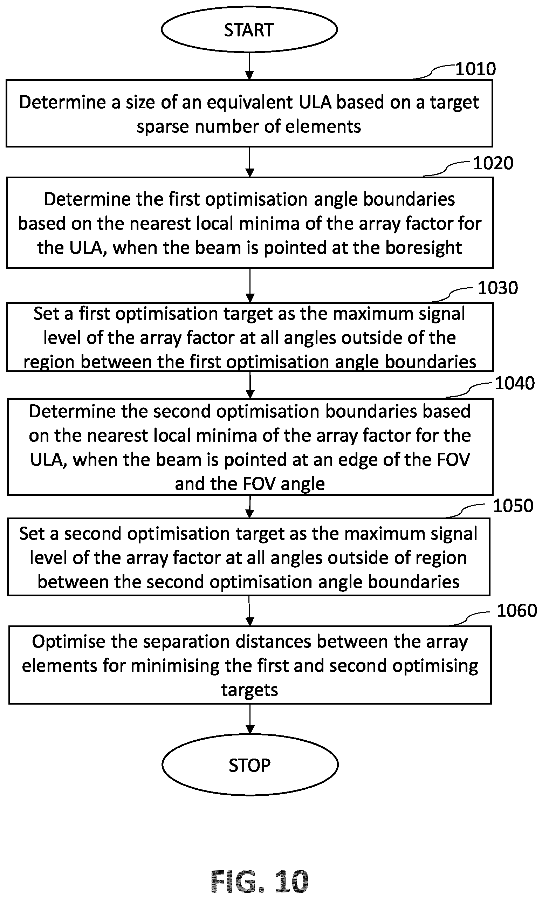

FIG.10 is a flowchart illustrating a method for forming a sparse array antenna, in accordance with an embodiment of the present invention;

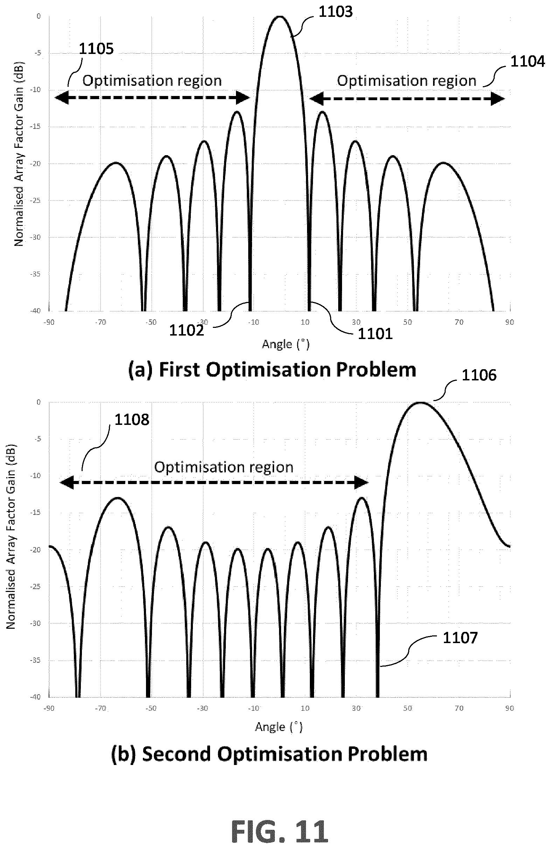

FIG.11 shows the optimisation regions used in the current invention for the first and second optimisation problems of the method of FIG.10;

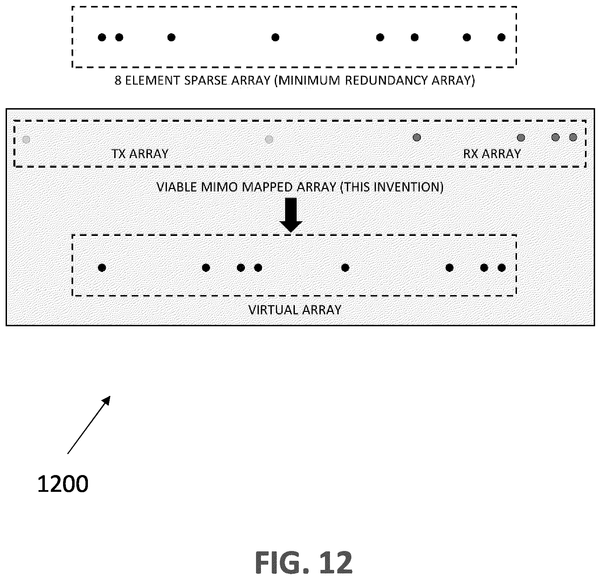

FIG.12 shows the layout for 8-element sparse array with MIMO mapping when compared to a traditional 8-element MRA;

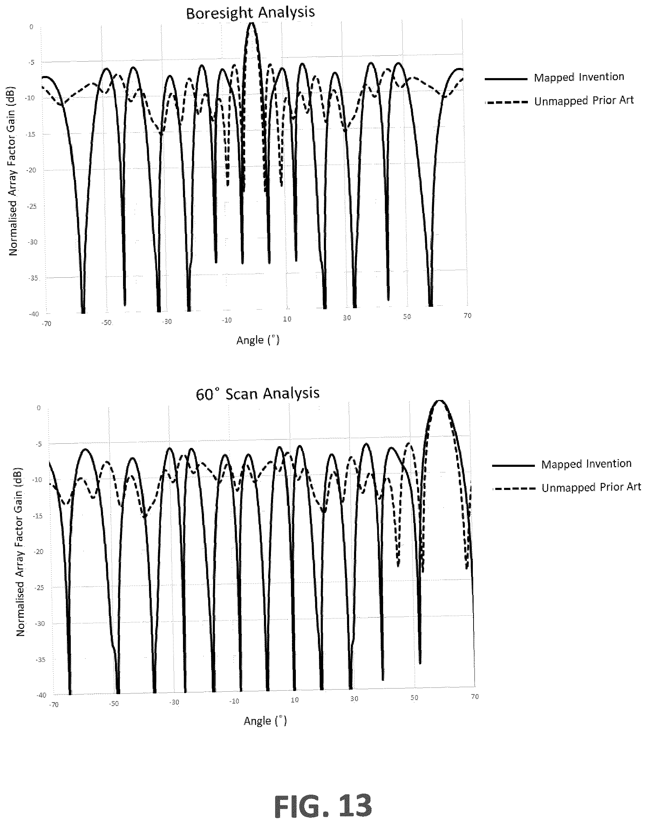

FIG.13 compares the prior art array factor for an unmapped MHA layout and the MIMO mapped layout shown in FIG.12, developed using the current invention;

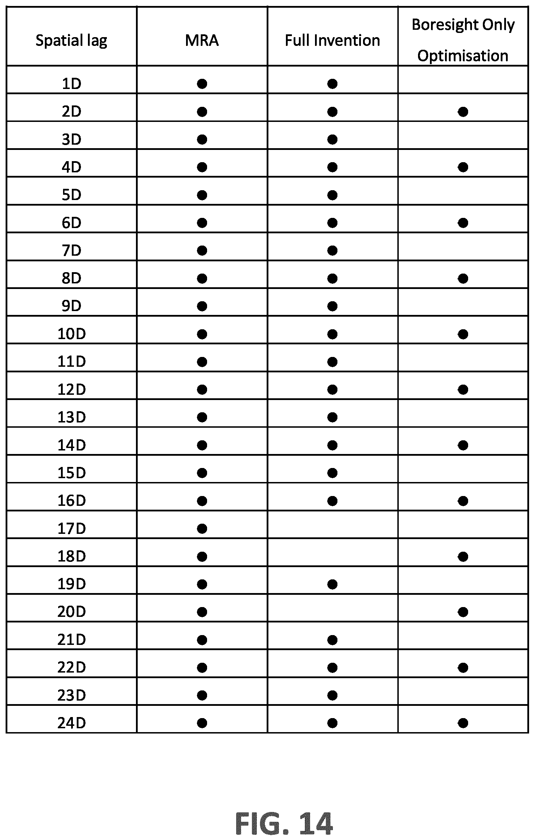

FIG.14 shows the spatial lag chart for an MRA, MIMO array shown in **Error! Reference source not found,** and the example of a MIMO array optimised only at boresight; and

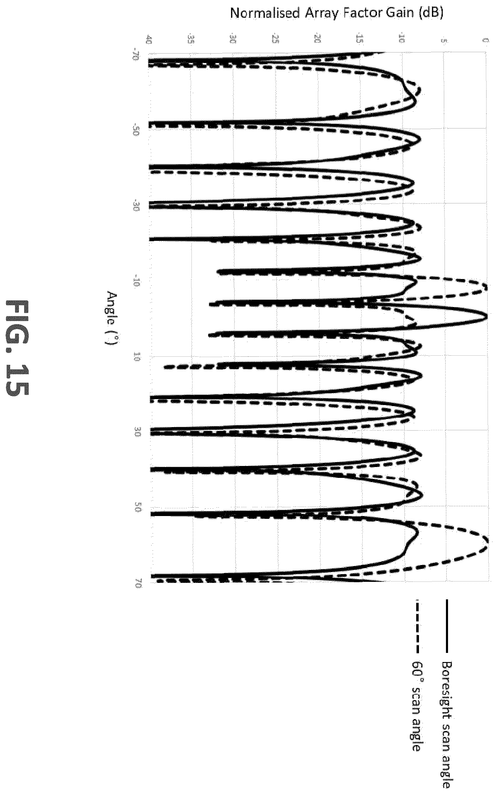

FIG.15 shows the effect on sidelobes for beams scanned off-boresight when consideration is not given to the radiation pattern at the edge of the FOV during optimisation.

## DETAILED DESCRIPTION OF THE DRAWINGS

It has been previously stated that when a high angular resolution is required in radar systems, a narrower beam is needed. To achieve this with or without the additional virtual element gains of a MIMO system, a larger antenna array with additional elements must be used. This means additional transmitters (in the case of a MIMO system) and/or receivers (in the case of a MIMO or single TX system) would be required, resulting in an increase to the overall radar cost and size. To keep costs low however, sparse arrays are often used.

Based on FIG.1, it can be said that the shape of the radiation pattern/array factor is formed because a time delay would exist between the signals arriving at each element within the array. The main lobe, or global maximum, of the radiation pattern/array factor is formed along the spatial direction in which the signals add constructively (in phase) to produce a maximum. In turn, this direction is dependent upon the angle that the signal either approaches the array (receive) or the phase delay between antenna elements (transmit). In a ULA, the separation between adjacent elements is the same, and typically the Nyquist sampling criterion is satisfied to prevent grating lobes from being formed in the radiation patter/array factor over the desired field of regard. However, as the distance between elements in an equivalent sparse array is not identical, the beam pattern would change, and sidelobes, which as has been previously defined are regions of local maxima occurring off-boresight, where the signal level is significant, would increase.

The prior art mathematical prediction of the radiation pattern of an array is now discussed, where for a wavefront impinging on a ULA of receivers at an angle $\theta$, with the receivers have a spacing of D, the wavefront travels an extra distance of $(n-1) D \sin(\theta)$ to reach the nth element in the array compared to the 1st element. This time delay gives rise to a progressive phase delay across the entire array, of $(n-1) \Phi$ at the nth element. When the signal arrives at each element simultaneously, it will correspond to an angle of incidence of 0-degrees, or at boresight. It is typically true that, for a given element separation, the greater the number of elements in the array, the finer the beamwidth and consequently, the angular resolution that can be achieved.

Mathematically, this focusing effect of an array can be expressed as the array factor, which is the complex valued far-field radiation pattern of an array of isotropic radiators. The one-dimensional array factor for a ULA can be expressed elegantly at each discrete angle $\theta$ using:

$$AF(\theta) = \sum_{n=0}^{N-1} w_n e^{j\frac{2\pi n}{\lambda} D sin(\theta)} \ldots\ldots\ldots\ldots\ldots(2)$$

where $w_n$ is the complex weighting (having an amplitude and phase) at the nth element in the array, and D is the element separation. Those familiar in the art will appreciate that for a ULA, the term D is usually a distance of half a wavelength at the frequency of operation and is unchanged between elements, but that the equation can be re-written in terms of distances from the first element as:

$$AF(\theta) = \sum_{n=0}^{N-1} w_n e^{j\frac{2\pi}{\lambda} \Sigma_0^n D_n sin(\theta)} \ldots\ldots\ldots\ldots\ldots(3)$$

where $D_0$ is the distance of the first element to itself and is therefore 0. This equation can, in turn, be used to determine the array factor of a sparse array.

To convert the array factor to decibels, a LOG function is used, so that:

$$AF_{dB}(\theta) = 20log_{10}[AF(\theta)]\ldots\ldots\ldots\ldots\ldots(4)$$

When the array factor is calculated using the element locations of a physical array and multiplied by the radiation pattern of a single physical antenna element in that array, the resulting radiation pattern provides a good approximation for the radiation pattern of the physical array (not including effects such as mutual coupling between elements in the physical array which may alter the pattern). In decibel form, the gain of the array is given by:

$$G_A(\theta) = AF_{dB}(\theta) + G_E(\theta)\ldots\ldots\ldots\ldots(5)$$

Where $G_E$ is the gain of a single element.

The steering angle of the array can be controlled by varying the phase of the weighting term $w_n$. Furthermore, by reducing the amplitude of the weighting term $w_n$ at specific elements, the array pattern can be shaped to reduce the signal level of the sidelobes, but this is a detriment to the overall antenna gain.

It has been previously shown that prior art sparse arrays do not concurrently consider the size of sidelobes, the number of missing spatial lags or the MIMO array mapping conditions, whereas the present invention takes all these factors concurrently into account.

As per FIG.7, there is no fixed rule for most prior art sparse array designs to determine the exact reduction in the number of elements that can be obtained from a reduced element sparse array relative to a typical ULA, where D is a half wavelength of the operating frequency. However, there are trends that can be followed for either minimum redundancy or the minimum number of holes, or missing spatial lags. The sparse array optimisation region typically lies between the minimum hole array - which is the most extreme in terms of number of elements relative to array aperture size - and the ULA or 'filled array'. By comparing this mapping to an equivalent ULA mapping, the increases in array aperture size is easily seen.

Furthermore, as most analyses consider the removal of elements from a ULA rather than the expansion of an array from a known number of elements to a larger uniform array, an equation had been developed based on these trends to give a first order approximation of this increase when element placement restrictions such as MIMO array mappings are applied:

*Equivalent no. of ULA elements (restricted)* $\approx$

$$\begin{cases} 0.32x^2 + 0.45x - 0.24, x < 12 \\ 0.9x^2 - 4x + 9, x \geq 12 \end{cases} \ldots\ldots\ldots(6)$$

where x is the number of sparse array elements.

By examining this equation further, it is seen to follow the trend given by prior art minimum redundancy array calculations when $x < 12$, and follow the trend given by minimum hole array calculations, where layout mapping restrictions have less effect, when $x \geq 12$. These trends are plotted in FIG.7, where most possible equivalent ULA sizes would occur in the shaded or optimisation region when the degrees of freedom of the invention's calculations are reduced by enforcing element placement restrictions in the design. However, if element placement restrictions are not needed, such as the case when MIMO is not used, then the solution invariably follows the MHA trend, and the following equation can be used as a first approximation equivalent ULA size in the current invention.

*Equivalent no. of ULA elements (unrestricted)*

$$\approx 0.9x^2 - 4x + 9 \dots (7)$$

where x remains the number of sparse array elements.

Various embodiments of the present invention enable the calculations to either give values for the separation between the $n^{th}$ and $(n+1)^{th}$ elements, $D_n$, that are integer multiples of the unit separation distance D (which generally continues to be a half wavelength of the operating frequency), or be given freedom to find separation distances containing real numbers. When the former condition is set for the case where element placement restrictions are not needed (i.e., when equation 7 is followed), the prior art element placements positions for the equivalent MHA are ultimately found. It is well known in the field that most post-processing techniques prefer to keep an integer number of distances, D, between elements and so this condition is used here. This simplifies the array angle-of-arrival processing, which typically uses FFT-based techniques.

In an embodiment of the present invention, the layout restrictions caused by MIMO mapping are considered, which is why the prior art co-prime and nested array techniques mentioned earlier were developed. In a MIMO radar, the mapped positions of the virtual elements produced by the $n^{th}$ TX and $m^{th}$ RX antenna pair in the MIMO are given by $(x_{(m + (n-1)M)}, y_{(m + (n-1)M)}) = (x_n, y_n) + (x_m, y_m)$, where M is the total number of RX antennas. By way of example, the MIMO configuration shown in FIGs. 1 and 8 shows that a combination of 2 x TX elements with a spacing of 4D and 4 x RX elements at a spacing of D results in a virtual ULA of 8 elements at a spacing of D. However, if all 8 virtual elements could be mapped into a sparse array, the resulting sparse array would have an aperture size equal to that of a ULA of 24 elements (according to equation 6). However, due to the virtual element positions being a sum of the TX and RX element positions for each TX-RX pair, the RX element spacings are repeated N times throughout the virtual MIMO array, where N is the number of TX antennas in the MIMO, and it is impossible to place the TX and RX antenna elements so that a mapped /virtual MIMO array conforms to any previously reported sparse arrays of a similar equivalent size.

To explain this further, a minimum redundancy sparse array which also has an equivalent ULA size of 24 elements is now shown in FIG.9. Many prior art disclosures have discussed the development of these well-known sparse array types where the element positions have been frequently found using specific optimisation algorithms such as genetic optimisation which assumes each sparse array element must lie somewhere within a smaller, predefined range. Such techniques are well known in the field, but it is clear and obvious that such an array cannot be formed, and such optimisation algorithms cannot be used in a MIMO virtual array configuration as the element spacings cannot be made to align when the virtual array is mapped.

FIG.9 shows this diagrammatically with the comparison between the MRA and a mapped MIMO arrangement using 2 x TX elements and 4 x RX elements, which is only able to position 5 out of the 8 elements correctly.

In such MIMO cases, co-prime arrays are often used to form the virtual sparse array since there are equations available to calculate element placements, but these have smaller apertures than other sparse array options (falling closer to the MRA trendline in FIG.7), so their effectiveness in improving angular resolution is also reduced. Furthermore, when such prior art virtual arrays have been designed, their focus has been to concentrate only on spatial lag coverage or alternatively on reducing spatial lag redundancy, while sidelobe levels have only been given secondary consideration, if at all.

In an embodiment of the present invention, both spatial lag coverage and radiation pattern sidelobe levels have been considered by focusing on the calculated radiated pattern, for the main beam, at both boresight and simultaneously at the edge of the FOV, which is achieved by adding the correct phase to each weighting element $w_n$ and is a well-known technique to those familiar in the field, where the phase added at each element in the same plane of the array is:

$$\phi_n = \frac{360\, D_n\, sin\left(\frac{\Theta\, \pi}{180}\right)}{\lambda} \text{ degrees} \dots\dots\dots\dots\dots\dots(8)$$

and $\Theta$ is the angle where the edge of the FOV occurs.

Here, a solution is sought to minimise the array factor sidelobe levels and thereby the physical array radiation pattern, for both beam conditions by optimising the separation between the sparse elements and minimising any possible false detections that may be introduced by the sparse array at all angles within the FOV.

FIG.10 is a flowchart illustrating a method 1000 for forming a sparse array antenna, in accordance with an embodiment of the present invention. FIG.11 shows the optimisation regions used in the current invention for the first and second optimisation problems of the method of FIG.10.

At step 1010, a size of an equivalent uniform linear array (ULA) aperture is determined based on the number of sparse elements, using the equation (5) and the separation distance D. The separation distance D is usually a half wavelength of the operating frequency.

At step 1020, the positive and negative angles are chosen, from boresight, of the nearest local minima (1101, 1102) of the array factor for this ULA, having equal phase applied to all elements and setting these as the first optimisation boundaries for the virtual array element positions of the sparse array.

At step 1030, a first optimisation target is set as the maximum signal level of the array factor at all angles outside of the region between these first optimisation boundaries, i.e. we want to minimise the level of side lobes within this angular range. This completes the definition of the first problem and essentially accounts for all optimisation regions 1104 and 1105 outside the main lobe 1103.

Then, a second problem for the condition with element phases added according to the separation distances from the first element in the sparse array (equation 7) is defined, with the main beam 1106 pointed at the edge of the FOV (typically 60-degrees off boresight). In an embodiment of the present invention, the second optimisation problem may be fixed to solve the condition for the main beam pointed at 60-degrees off-boresight, to define the problem for the case when omnidirectional antenna elements are used.

For the second problem, at step 1040, the second optimisation boundaries for most practical antennas are set based on the nearest minimum 1107 of the array factor around the main beam peak when steered to this edge of the FOV, and the FOV angle (60-degrees off boresight in the example in Fig. 11). However, when omnidirectional antenna elements are used the second optimisation boundaries are set based on both nearest minimums of the array factor around the main beam peak when steered to this edge of the FOV. The edge 1107 is chosen as the one occurring closer to boresight than the steered direction of the beam, which is usually steered in the positive angular direction from boresight, but which can be steered in the negative direction without restriction or change to the described invention. In an embodiment of the present invention, there may be at least two optimisation targets. In an example, the optimisation targets may be at 0°, +60° and -60°.

At step 1050, a second optimisation target is set as the maximum signal level of the array factor, for the region 1108, at all angles outside of the second optimisation angle boundaries, i.e. as with the first optimisation target, the level of side lobes is minimised within this angular range. In an embodiment of the present invention, a weighting function may be applied to this second optimisation target by multiplying it by a factor of k where a value of $k = 4$ is used in this invention. Any value for k can be employed and is arbitrarily chosen depending on the type of optimisation algorithm used. The value of $k$ may be used without restriction or change to the described invention. In an embodiment of the present invention, a weighting function may be applied to the first optimisation target, to give priority to the detections around boresight to lower down the sidelobe levels.

At step 1060, the separation distances between the antenna array elements are optimised for both the first and second problems, with identical distances linked (due to the MIMO virtual array mapping), for a combined optimisation target comprising of the sum of both the first and second optimisation targets.

In an embodiment of the present invention, the optimisation goal is set to find a minimum of this newly defined, combined optimisation target. Any type of optimisation algorithm can be used, but a Generalised Reduced Gradient type is used in this invention. A solution is found when either the global minimum is found for the combined problem or the sidelobe levels have been reduced to an acceptable level in both the first and second problems. By optimising the level of the array factor, the resulting sidelobes from the sparse array are reduced. In another embodiment of the present invention, the radiation pattern may be optimized rather than the array factor, to help reduce the sidelobe levels as the optimiser concentrates on the angular region where the gain of the single antenna element is high.

In an embodiment of the present invention, a Generalized Reduced Gradient function is used to look at the gradient of a function, as the decision variables (or separation distances) change and it is determined that it has reached an optimum solution when the partial derivatives equal zero. By randomly varying the initial, or starting values, of the decision variables and repeating the process, it is possible over time to ensure that the global minimum is found rather than a local minimum, which may happen to occur near the starting values. The invention is not reliant on any particular type of solver however, and others such as a gradient, random, simplex or Newton Raphson may be used. Furthermore, by focusing on the signal level of the array factor, the resulting sidelobes from the sparse array are reduced, and by combining the problem for the main beam focused at boresight and at the edge of the FOV simultaneously, a solution is found that considers both the sidelobe level (primarily as a result of the boresight optimisation) and the spatial lags (primarily as a result of the edge of the FOV scan angle optimisation).

As the separation distances are linked during the process according to the designed MIMO mapped architecture and optimised for all possible separations in the virtual array configuration, all virtual elements can be optimised allowing the virtual array size to be maximised, while reducing the number of missing spatial lags and array factor sidelobe levels. A further consequence of linking the mapped virtual element spacings (due to the MIMO architecture) means that the number of optimisation variables is reduced and the design process becomes much quicker as a result relative to one that doesn't operate on the mapped virtual element spacings.

By considering the previous example of the 8-element array in FIG.9, the invention is demonstrated by minimising the array factor outside the main beam, calculated from equation 4, with two beams computed simultaneously, focused at boresight and at 60-degrees (which is typically the edge of the FOV for most planar antennas), while allowing the variables $D_n$ to change. Due to the MIMO layout mapping, the degrees of freedom of the problem are reduced by setting $D_1 = D_5$, $D_2 = D_6$ and $D_3 = D_7$ with the restriction set that $D_1 + D_2 + D_3 + D_4 + D_5 + D_6 + D_7 = 11.5$ wavelengths (based on 24 elements at a 0.5 wavelength spacing, and found when x is set to 8 in equation 7).

FIG.12 shows a viable MIMO mapped array 1200, in accordance with an embodiment of the present invention. The array factors for the prior art 8-element MRA and the layout derived from the MIMO mapped array 1200 of this invention show similar sidelobe levels when compared in FIG.13. This MIMO mapped array 1200 has only 3 missing holes in the difference array, FIG. 14, with lags of 17D, 18D and 20D absent, out of all possible 23 combinations (13%). This shows that, although some holes exist, the number of these is considerably reduced when compared to similar MIMO layouts optimised for low sidelobe levels using boresight only optimisation, and the invention can be considered as a type of minimum hole array with a reduced aperture size. By comparing holes that appear in this invention to that of a prior art 8-element equivalent MHA, which has a similar although slightly larger array aperture, it is seen that over 17% of holes exist in the larger, prior art MHA where the first hole appears for lag 16D. This hole must be recovered by digital signal processing techniques such as Iterative Method with Adaptive Threshold (IMAT) or matrix completion, but must also be based on one fewer spatial lags (1D to 15D) than for recovery of lag 17D for the described invention (1D to 16D). Similar results are seen to occur for larger sparse arrays. The MIMO mapped array 1200 has therefore been derived using a novel technique, which allows full control over MIMO virtual array layouts and has a performance similar to the equivalent prior art MRA, which cannot be configured as a virtual array layout in a MIMO system. The MIMO mapped array 1200 of the present invention can be used in defense or warfare systems but is more specifically applicable for automotive applications where lower cost is a high priority. Although, the MIMO array 1200 is a single dimensional array, it would be apparent to one of ordinary skill in the art, that the MIMO array 1200 may be used to form a rectangular array.

It has been previously stated that by including the second optimisation problem where the beam is pointed at the edge of the FOV, the number of holes is greatly reduced, which can be seen in the spatial lag chart of FIG.14. This is the main aspect of the current invention where, when the main lobe is pointed at the edge of the FOV, the optimiser is forced to reduce the magnitude of grating lobes. These are defined as radiation pattern lobes other than the main lobe, which occur when the inter-element spacing along with added phases is sufficiently large to permit the in-phase addition of radiated

$$\frac{d}{\lambda} < \frac{1}{(1 + \sin \theta)}$$

fields in more than one direction, and can be ideally avoided provided that the                    equation remains valid, where $\lambda$ is the wavelength of the operating frequency, d is the distance between elements and $\Theta$ is the angle of direction in radians). This, in turn means that the sparse array element positions are restricted from having very large separations, and in turn means that the likelihood of the removal of spatial lags is greatly reduced. FIG.14 shows this effect by comparing lags for an MRA, the previously described MIMO array example and the example of a MIMO array optimised with only the first optimisation problem at boresight, considered. The need for the second optimisation problem is further represented in FIG.15, where array factor plots at boresight and at the edge of the FOV (60-degrees) are compared.

When optimisation is only considered at boresight, i.e., for the first optimisation problem, the sidelobes are seen to be kept to a relatively low level for the boresight scan angle. However, when phase-delays are added between antenna elements in such a way that the main beam is scanned to 60-degrees, a large grating lobe is seen to exist which means, in addition to the DSP processing complexity of 12 missing spatial lags, that signals arriving from objects near boresight could be interpreted as arriving from objects at 60-degrees (and vice-versa).

Thus, by optimising the problem simultaneously for both the main beam focused at boresight and at the edge of the FOV, a solution is found that considers both the sidelobe level (primarily as a result of the boresight optimisation) and the spatial lags (primarily as a result of the edge of the FOV scan angle optimisation). It is to be noted, that the sidelobe levels for a particular beam pointing angle can be reduced significantly if the optimisation problem is only considered for one condition, i.e., with the main beam pointed at either boresight or at the edge of the FOV. However, this is to the detriment of the sidelobe levels when the main beam is scanned to other angles. In these instances, solutions which allow more holes in the difference array are found, and thus the DSP complexity is increased.

By forcing the transmit and receive array elements to be placed in accordance with the MIMO element mappings in the optimisation problem, and thereby the virtual array element placements, the overall virtual array is optimised for all possible configurations of transmit and receive element placements. The maximum number of possible virtual elements are also used, which allows the virtual array size to be maximised. Further, by linking the array element spacings together in accordance with the MIMO element mappings, the number of variables optimised is reduced compared to that of a sparse array design with the same number of elements but with no constraints on the spacings between them, and the design process becomes much quicker. Furthermore, by maximising the size of the virtual array, the equivalent ULA size is increased meaning that the angular accuracy and resolution are increased.

In the specification the terms "comprise, comprises, comprised and comprising" or any variation thereof and the terms include, includes, included and including" or any variation thereof are considered to be interchangeable, and they should all be afforded the widest possible interpretation and vice versa.

The invention is not limited to the embodiments hereinbefore described but may be varied in both construction and detail.

## Claims

1. A method for designing a sparse antenna array comprising:

   determining a first set of separation distances among a plurality of sparse elements along an axis, wherein the first set minimises the highest radiated power of one or more sidelobes, when the beam is pointed at a boresight for a Uniform Linear Array (ULA) that has an equivalent aperture size but greater number of elements with respect to the sparse antenna array; and
   determining at least one second set of separation distances among the plurality of sparse elements, that minimises the highest radiated power of one or more sidelobes, when the beam is pointed at different angular directions wherein at least one of these directions is at an edge of the field of view for the equivalent ULA, wherein the first, and at least one second set of separation distances are identical and optimised simultaneously to minimise their combined error function.

2. The method as claimed in claim 1, wherein:
   the at least one second set of separation distances, among the plurality of sparse elements along an axis, minimises the highest radiated power of one or more sidelobes, when the beam is pointed at an angle of 60 degrees off boresight.

3. The method as claimed in any preceding claim further comprising:
   determining a third set of separation distances, among the plurality of sparse elements, that minimises the highest radiated power of one or more sidelobes, when the beam is pointed at an angle of -60 degrees off boresight.

4. The method as claimed in any preceding claim, wherein the highest array factor level of one or more sidelobes is minimised for the first and subsequent sets of identical separation distances.

5. The method as claimed in any preceding claim, wherein each of the first and subsequent sets of separation distances include distances that are multiples of the unit separation distance, wherein the unit separation distance is equivalent to half wavelength of an operating frequency of the sparse antenna array.

6. The method as claimed in any preceding claim, wherein an aperture size of the sparse antenna array is approximated from a size trend for a minimum redundancy array when the number of sparse elements is less than 12.

7. The method as claimed in any preceding claim, wherein an aperture size of the sparse antenna array is approximated from a size trend for a minimum hole array, when the number of sparse elements is equal to or greater than 12.

8. The method as claimed in any preceding claim further comprising applying a first weighting factor to the calculation of the first set of separation distances to minimise the sidelobe levels at boresight.

9. The method as claimed in any preceding claim, further comprising applying weighting factors to the calculation of any further sets of separation distances to reduce the number of missing spatial lags in the sparse antenna array.

10. The method as claimed in any preceding claim, wherein the optimised sparse array is a MIMO virtual array, which is the result of mapping the positions of a plurality of transmit elements and the positions of a plurality of receive elements, wherein the mapping of the MIMO virtual array is taken into account during the optimisation of the first and the at least one other set of separation distances.

FIG.1

PRIOR ART

11

D

7 x ELEMENT ULA

EQUIVALENT 4-
ELEMENT SPARSE
ARRAY (MRA/MHA)

D

2D

3D

SPATIAL LAGS

4D

5D

6D

# FIG.2
## PRIOR ART

FIG.3

PRIOR ART

ARRAY 1

ARRAY 2

$D_1$ $D_1$ $D_1$ $D_1$ $D_2$ $D_2$ $D_2$ $D_2$

NESTED ARRAY

# FIG.4

# PRIOR ART

ARRAY 1

$D_1$ $D_1$ $D_1$ $D_1$

ARRAY 2

$D_2$ $D_2$ $D_2$ $D_2$

$D_1$ $D_1$ $D_1$ $D_1$

$D_2$ $D_2$ $D_2$ $D_2$

CO-PRIME ARRAY

# PRIOR ART

**FIG. 6**

**PRIOR ART**

Sparse Array Size

## FIG. 7

## PRIOR ART

TX ARRAY

RX ARRAY

VIRTUAL ARRAY

## PRIOR ART

## FIG. 8

8 ELEMENT SPARSE ARRAY (MINIMUM REDUNDANCY ARRAY)

TX ARRAY

RX ARRAY

VIRTUAL ARRAY

MIMO MAPPING OF MINIMUM REDUNDANCY ARRAY (5 ELEMENTS CORRECT)

# FIG. 9
# PRIOR ART

START

1010

Determine a size of an equivalent ULA based on a target sparse number of elements

1020

Determine the first optimisation angle boundaries based on the nearest local minima of the array factor for the ULA, when the beam is pointed at the boresight

1030

Set a first optimisation target as the maximum signal level of the array factor at all angles outside of the region between the first optimisation angle boundaries

1040

Determine the second optimisation boundaries based on the nearest local minima of the array factor for the ULA, when the beam is pointed at an edge of the FOV and the FOV angle

1050

Set a second optimisation target as the maximum signal level of the array factor at all angles outside of region between the second optimisation angle boundaries

1060

Optimise the separation distances between the array elements for minimising the first and second optimising targets

STOP

FIG. 10

(a) First Optimisation Problem

(b) Second Optimisation Problem

FIG. 11

8 ELEMENT SPARSE ARRAY (MINIMUM REDUNDANCY ARRAY)

TX ARRAY

RX ARRAY

VIABLE MIMO MAPPED ARRAY (THIS INVENTION)

VIRTUAL ARRAY

1200

FIG. 12

FIG. 13

| Spatial lag | MRA | Full Invention | Boresight Only Optimisation |
|:---:|:---:|:---:|:---:|
| 1D | ● | ● | |
| 2D | ● | ● | ● |
| 3D | ● | ● | |
| 4D | ● | ● | ● |
| 5D | ● | ● | |
| 6D | ● | ● | ● |
| 7D | ● | ● | |
| 8D | ● | ● | ● |
| 9D | ● | ● | |
| 10D | ● | ● | ● |
| 11D | ● | ● | |
| 12D | ● | ● | ● |
| 13D | ● | ● | |
| 14D | ● | ● | ● |
| 15D | ● | ● | |
| 16D | ● | ● | ● |
| 17D | ● | | |
| 18D | ● | | ● |
| 19D | ● | ● | |
| 20D | ● | | ● |
| 21D | ● | ● | |
| 22D | ● | ● | ● |
| 23D | ● | ● | |
| 24D | ● | ● | ● |

FIG. 14

FIG. 15

Normalised Array Factor Gain (dB)

Angle (°)

Boresight scan angle

60° scan angle

Europäisches Patentamt
European Patent Office
Office européen des brevets

# EUROPEAN SEARCH REPORT

**Application Number**

EP 23 19 2754

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIN RONGHAO ET AL: "On the design of linear sparse arrays with beampattern shift invariant properties", SIGNAL PROCESSING, ELSEVIER, AMSTERDAM, NL, vol. 199, 23 May 2022 (2022-05-23), XP087095549, ISSN: 0165-1684, DOI: 10.1016/J.SIGPRO.2022.108632 [retrieved on 2022-05-23] | 1-5,10 | INV. G01S7/03 G01S13/44 H01Q3/34 H01Q21/08 ADD. G01S13/931 |
| Y | * page 2, left-hand column, line 26 – line 41 * | 6,7 | |
| A | * page 2, right-hand column, line 1 – line 4 * * page 4, right-hand column, line 1 – line 5 * * page 6, right-hand column, line 1 – line 28 * * page 8, left-hand column, line 8 – line 13 * * figures 1-14 * | 8,9 | |
| X | MATEOS-NUNEZ DAVID ET AL: "Sparse array design for Automotive MIMO Radar", 2019 16TH EUROPEAN RADAR CONFERENCE (EURAD), EUMA, 2 October 2019 (2019-10-02), pages 249-252, XP033663812, [retrieved on 2019-11-18] | 1-5,8-10 | TECHNICAL FIELDS SEARCHED (IPC) G01S H01Q |
| Y | * abstract * * page 249, right-hand column, line 26 – page 250, left-hand column, line 2 * * page 250, left-hand column, line 28 – right-hand column, line 2 * * figures 1-5 * | 6,7 | |

-/--

The present search report has been drawn up for all claims

| Place of search | Date of completion of the search | Examiner |
|---|---|---|
| Munich | 10 January 2024 | Köppe, Maro |

EPO FORM 1503 03.82 (P04C01)

Europäisches
Patentamt

European
Patent Office

Office européen
des brevets

# EUROPEAN SEARCH REPORT

**Application Number**

EP 23 19 2754

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JIAN DONG ET AL: "Co-array properties of minimum redundancy linear arrays with minimum sidelobe level", ANTENNAS, PROPAGATION AND EM THEORY, 2008. ISAPE 2008. 8TH INTERNATIONAL SYMPOSIUM ON, IEEE, PISCATAWAY, NJ, USA, 2 November 2008 (2008-11-02), pages 74-77, XP031398994, ISBN: 978-1-4244-2192-3 | 6 | |
| A | * page 74, right-hand column, line 6 – page 75, left-hand column, line 2 * <br> * page 76, right-hand column, line 1 – line 20 * <br> * figures 1-2 * | 1-5,7-10 | |
| Y | Vertatschitsch E. ET AL: "Nonredundant arrays", Proceedings of the IEEE, 1 January 1986 (1986-01-01), pages 217-217, XP093117636, New York, NY DOI: 10.1109/PROC.1986.13435 Retrieved from the Internet: URL:https://ieeexplore.ieee.org/stampPDF/g etPDF.jsp?tp=&arnumber=1457703&ref=aHR0cHM 6Ly9pZWVleHBsb3JlLmllZWUub3JnL2RvY3VtZW50L zE0NTc3MDM= [retrieved on 2024-01-10] | 7 | TECHNICAL FIELDS SEARCHED (IPC) |
| A | * page 217, left-hand column, line 35 – line 51 * | 1-6,8-10 | |

The present search report has been drawn up for all claims

| Place of search | Date of completion of the search | Examiner |
|---|---|---|
| Munich | 10 January 2024 | Köppe, Maro |